# EUROPÄISCHE PATENTSCHRIFT

(11) **EP 3 553 412 B1**
(45) Veröffentlichungstag und Bekanntmachung des Hinweises auf die Patenterteilung: **02.12.2020**
(21) Anmeldenummer: 19167015.7
(22) Anmeldetag: 03.04.2019
(51) Int. Cl.: F24H 9/12, F28D 20/00, F28D 7/02

(54) **WARMWASSERSPEICHER**
HOT-WATER TANK
BALLON D'EAU CHAUDE

(30) Priorität: 11.04.2018 DE 102018108565
(43) Veröffentlichungstag der Anmeldung: 16.10.2019
(73) Patentinhaber: Viessmann Werke GmbH & Co. KG, 35108 Allendorf (DE)
(72) Erfinder: Fiacre, Jean-Jaques, 57500 Saint-Avold (FR)
(74) Vertreter: Wolf, Michael

(56) Entgegenhaltungen:
- EP-A2- 0 928 940
- WO-A1-2005/093337
- WO-A1-2013/083911
- DE-C1- 4 322 032
- FR-A- 555 666

## Beschreibung

Die Erfindung betrifft einen Warmwasserspeicher gemäß dem Oberbegriff des Patentanspruchs 1. Solch ein Warmwasserspeicher ist beispielsweise aus WO 2013/083911 A1 bekannt.

Ein Warmwasserspeicher der eingangs genannten Art ist auch aus der nachveröffentlichten DE 10 2017 113 076 A1 bekannt. Dieser Warmwasserspeicher besteht aus einem Behälter, der an einer Stelle seines Bodenbereichs von einem Zufuhrrohr für zu speicherndes Wärmeträgermedium durchgriffen ausgebildet ist, wobei dieses in eine im Innern des Behälters angeordnete, zur Verteilung des Wärmeträgermediums vorgesehene Umlenkeinrichtung ausmündend ausgebildet ist. Der Bodenbereich dieses Warmwasserspeichers ist dabei, und dies gilt auch für eine bevorzugte Ausführungsform des nachfolgend noch zu erläuternden, erfindungsgemäßen Warmwasserspeichers, als sogenannter Klöpperboden (siehe hierzu https://de.wikipedia.org/w/index.php?title= Gew %C3%B6lbter_Boden&oldid=158486704) eines Schichtspeichers ausgebildet. Die genannte Umlenkeinrichtung dient dabei dazu, eine unerwünschte Unruhe bzw. Turbulenz im Einströmbereich des Wärmeträgermediums zu vermeiden. Die Besonderheit dieses Warmwasserspeichers besteht darin, dass der Bodenbereich an einer anderen, zum Zufuhrrohr distanzierten Stelle von der Umlenkeinrichtung durchgriffen ausgebildet ist.

Der Erfindung liegt die Aufgabe zugrunde, einen Warmwasserspeicher der eingangs genannten Art zu verbessern. Insbesondere soll ein noch einfacher herstellbarer Warmwasserspeicher geschaffen werden.

Diese Aufgabe ist mit einem Warmwasserspeicher der eingangs genannten Art durch die im Kennzeichen des Patentanspruchs 1 aufgeführten Merkmale gelöst.

Nach der Erfindung ist also vorgesehen, dass die Umlenkeinrichtung wahlweise aus zwei baugleichen Einzelteilen oder aus einem einzigen, mittig ein Filmscharnier aufweisenden Einzelteil gebildet ist.

Mit anderen Worten zeichnet sich die erfindungsgemäße Lösung somit dadurch aus, dass nur noch eine einzige, insbesondere schieberfreie (siehe hierzu https://de.wikipedia.org/w/index. php?title=Formenbau&oldid=172187305#Schieber) Gussform zur Herstellung der gesamten Umlenkeinrichtung erforderlich ist. Bei der Variante mit zwei baugleichen Einzelteilen, werden diese einfach nacheinander (mit der gleichen Form) produziert und dann paarweise zu einer Umlenkeinrichtung zusammengefügt. Bei der Variante mit dem Filmscharnier (siehe hierzu auch https://de.wikipedia.org/w/index.php?title=Scharnier&oldid=17429 9826#Filmscharniere) wird die Umlenkeinrichtung durch zusammenklappen der beiden beidseitig des Filmscharniers angeordneten Teile erzeugt. Besonders vorteilhaft ist dabei, dass beide Varianten mit einem Handgriff, also sehr einfach montierbar sind.

Andere vorteilhafte Weiterbildungen des erfindungsgemäßen Warmwasserspeichers ergeben sich aus den abhängigen Patentansprüchen.

Der Vollständigkeit halber wird noch auf folgende Dokumente hingewiesen: DE 14 54 725 A, WO 2005/093337 A1, JP S58 -72838 A und DE 43 22 032 C1.

Der erfindungsgemäße Warmwasserspeicher einschließlich seiner vorteilhaften Weiterbildungen gemäß der abhängigen Patentansprüche wird nachfolgend anhand der zeichnerischen Darstellung zweier Ausführungsbeispiele näher erläutert.

### Es zeigt

- Figur 1: im Schnitt den erfindungsgemäßen Warmwasserspeicher mit der Umlenkeinrichtung im Bodenbereich;
- Figur 2: perspektivisch gemäß einer ersten Ausführungsform eine aus einem einzigen, mittig ein Filmscharnier aufweisenden Einzelteil gebildete Umlenkeinrichtung;
- Figur 3: perspektivisch gemäß einer zweiten Ausführungsform eine aus zwei baugleichen Einzelteilen gebildete Umlenkeinrichtung; und
- Figur 4: im Schnitt eine vergrößerte Darstellung der Umlenkeinrichtung gemäß Figur 3 im eingebauten Zustand am Warmwasserspeicher.

Der in den Figuren dargestellte Warmwasserspeicher besteht in bekannter Weise zunächst einmal aus einem vorzugsweise eine zylindrische Grundform mit vertikaler Zylinderachse aufweisenden Behälter 1, der an einer Stelle seines Bodenbereichs 1.1, der vorzugsweise als sogenannter Klöpperboden ausgebildet ist (siehe hierzu https://de.wikipedia.org/w/index.php?title=Gew %C3%B6lbter_Boden&oldid=158486704), von einem Zufuhrrohr 2 für zu speicherndes Wärmeträgermedium durchgriffen ausgebildet ist, wobei dieses in eine im Innern des Behälters 1 angeordnete, zur Verteilung des Wärmeträgermediums vorgesehene Umlenkeinrichtung 3 ausmündend ausgebildet ist.

Wesentlich für den erfindungsgemäßen Warmwasserspeicher ist nun, dass die Umlenkeinrichtung 3 wahlweise aus einem einzigen, mittig ein Filmscharnier 3.1 (solche Scharniere bestehen im Wesentlichen aus einer dünnwandigen Verbindung, die durch ihre Biegsamkeit eine begrenzte Drehbewegung der verbundenen Teile ermöglicht) aufweisenden Einzelteil oder aus zwei baugleichen Einzelteilen gebildet ist. Diese Umlenkeinrichtung 3 ist dabei vorzugsweise im Betrieb von unten nach oben durchströmt ausgebildet.

Dabei ist besonders bevorzugt vorgesehen, dass die Umlenkeinrichtung 3 aus Kunststoff gebildet ist.

Ferner ist besonders bevorzugt vorgesehen, dass die Umlenkeinrichtung 3 im Spritzgussverfahren hergestellt ausgebildet ist.

Weiterhin ist bevorzugt vorgesehen, dass die Umlenkeinrichtung 3 zur Befestigung am Zufuhrrohr 2 einen Rohranschlussstutzen 3.2 aufweist. Dieser ist dabei vorzugsweise aus zwei, miteinander über Verbindungselemente 3.6 verrastbaren Teilstücken gebildet.

Bezüglich der räumlichen Anordnung ist ferner besonders bevorzugt vorgesehen, dass eine Längsachse des Zufuhrrohres 2 in einem Winkel zwischen 45° und 90° zu einer an dieser Stelle am Bodenbereich 1.1 gedachten Tangentialebene orientiert angeordnet ist.

Weiterhin ist bevorzugt vorgesehen, dass eine im Behälter 1 ausmündende Öffnungsquerschnittsfläche 2.1 des Zufuhrrohres 2 in einem Winkel von 0° bis 45° zur Horizontalen verlaufend angeordnet ist.

Darüber hinaus ist bevorzugt vorgesehen, dass die Umlenkeinrichtung 3 an ihrem zum Zufuhrrohr 2 abgewandten Ende Austrittsöffnungen 3.3 für das Wärmeträgermedium aufweist. Diese Austrittsöffnungen 3.3 sind dabei bevorzugt an einer Umfangsfläche der Umlenkeinrichtung 3 angeordnet. Außerdem ist bevorzugt vorgesehen, dass die genannte Umfangsfläche (mit den Austrittsöffnungen 3.3) senkrecht zur vorgenannten Öffnungsquerschnittsfläche 2.1 des Zufuhrrohres 2 angeordnet ist.

Außerdem ist besonders bevorzugt zwischen dem Rohranschlussstutzen 3.2 und den Austrittsöffnungen 3.3 ein Strömungslabyrinth 3.4 zur mehrfachen Umlenkung des Wärmeträgermediums innerhalb der Umlenkeinrichtung 3 vorgesehen. Dabei ist weiter besonders bevorzugt vorgesehen, dass das Strömungslabyrinth 3.4 aus zwei Labyrinthteilen besteht, die wahlweise beidseitig des Filmscharniers 3.1 oder in beiden baugleichen Einzelteilen angeordnet sind.

Um trotz der vorzugsweise vorgesehenen Zuführung des Zufuhrrohres 2 von unten an den Warmwasserspeicher eine seitliche Anschlussmöglichkeit realisieren zu können, ist ferner bevorzugt vorgesehen, dass zwischen der Öffnungsquerschnittsfläche 2.1 des Zufuhrrohres 2 und einem außerhalb des Behälters 1 angeordneten, horizontal verlaufenden Rohrstück des Zufuhrrohres 2 ein gekrümmt ausgebildetes Zwischenrohrstück 2.3 angeordnet ist.

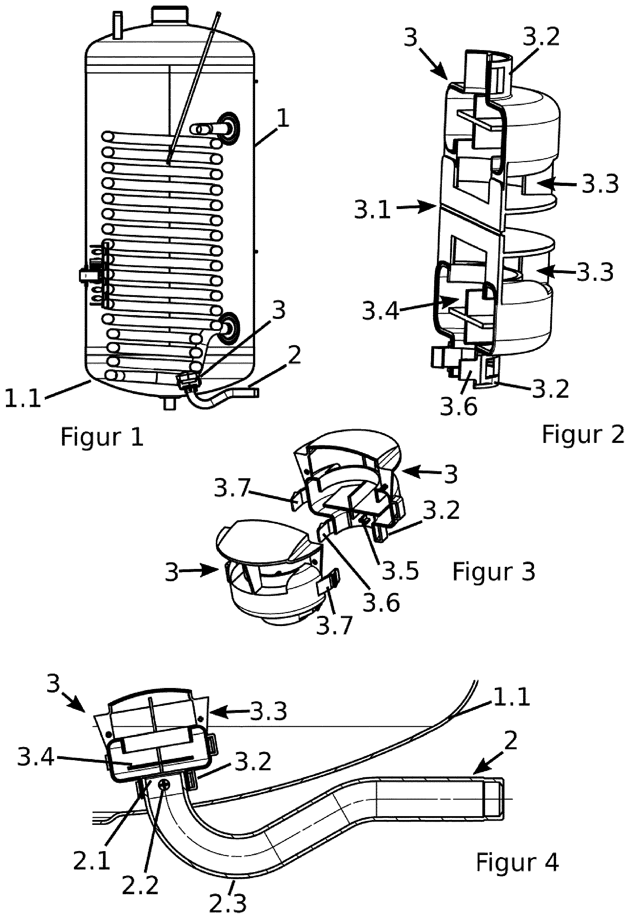

Weiterhin ist besonders bevorzugt an einem im Behälter 1 befindlichen Ende des Zufuhrrohres 2 ein Befestigungselement 2.2 für die Umlenkeinrichtung 3 vorgesehen. Besonders bevorzugt ist dieses Befestigungselement 2.2 dabei (siehe hierzu Figur 4) als Loch in einer Wandung des Zufuhrrohres 2 ausgebildet.

Außerdem ist entsprechend bevorzugt an der Umlenkeinrichtung 3 ein mit dem Befestigungselement 2.2 zusammenwirkendes Halteelement 3.5 vorgesehen. Dieses Halteelement 3.5 ist dabei besonders bevorzugt als in das Loch eingreifender Zapfen ausgebildet. Außerdem ist bevorzugt vorgesehen, dass das Haltelement 3.5 am vorgenannten Rohranschlussstutzen 3.2 angeordnet ist.

Mit Verweis insbesondere auf Figur 2 ist ferner bevorzugt vorgesehen, dass bei der Umlenkeinrichtung 3 mit Filmscharnier 3.1 dieses am dem Rohranschlussstutzen 3.2 abgewandten Ende der Umlenkeinrichtung 3 angeordnet ist.

Ferner ist besonders bevorzugt vorgesehen, dass bei der Umlenkeinrichtung 3 mit Filmscharnier 3.1 diese mit an entgegengesetzten Enden angeordneten Hälften des Rohranschlussstutzens 3.2 hergestellt und mit zusammengefügten Hälften des Rohranschlussstutzens 3.2 einsetzbar ausgebildet ist.

Weiterhin ist besonders bevorzugt vorgesehen, dass bei der Umlenkeinrichtung 3 mit Filmscharnier 3.1 die beiden mit dem Filmscharnier 3.1 verbundenen Teile um 180° schwenkbar zueinander ausgebildet sind.

Schließlich ist mit Verweis insbesondere auf Figur 3 besonders bevorzugt vorgesehen, dass bei der Umlenkeinrichtung 3 aus zwei baugleichen Einzelteilen oberhalb des Rohranschlussstutzens 3.2 und unterhalb der Austrittsöffnungen 3.3 weitere Verrastungselemente 3.7 zur Verbindung der Einzelteile vorgesehen sind.

### Bezugszeichenliste

- 1: Behälter
- 1.1: Bodenbereich
- 2: Zufuhrrohr
- 2.1: Öffnungsquerschnittsfläche
- 2.2: Befestigungselement
- 2.3: Zwischenrohrstück
- 3: Umlenkeinrichtung
- 3.1: Filmscharnier
- 3.2: Rohranschlussstutzen
- 3.3: Austrittsöffnung
- 3.4: Strömungslabyrinth
- 3.5: Halteelement
- 3.6: Verbindungselement
- 3.7: Verrastungselement

## Patentansprüche

1. Warmwasserspeicher, umfassend eine Umlenkeinrichtung (3) und einen Behälter (1), der an einer Stelle seines Bodenbereichs (1.1) von einem Zufuhrrohr (2) für zu speicherndes Wärmeträgermedium durchgriffen ausgebildet ist, wobei dieses in die im Innern des Behälters (1) angeordnete, zur Verteilung des Wärmeträgermediums vorgesehene Umlenkeinrichtung (3) ausmündend ausgebildet ist, **dadurch gekennzeichnet, dass** die Umlenkeinrichtung (3) wahlweise aus zwei baugleichen Einzelteilen oder aus einem einzigen, mittig ein Filmscharnier (3.1) aufweisenden Einzelteil gebildet ist.

2. Warmwasserspeicher nach Anspruch 1,
**dadurch gekennzeichnet,**
**dass** die Umlenkeinrichtung (3) zur Befestigung am Zufuhrrohr (2) einen Rohranschlussstutzen (3.2) aufweist.

3. Warmwasserspeicher nach Anspruch 1 oder 2,
**dadurch gekennzeichnet,**
**dass** die Umlenkeinrichtung (3) an ihrem zum Zufuhrrohr (2) abgewandten Ende Austrittsöffnungen (3.3) für das Wärmeträgermedium aufweist.

4. Warmwasserspeicher nach Anspruch 3,
**dadurch gekennzeichnet,**
**dass** die Austrittsöffnungen (3.3) an einer Umfangsfläche der Umlenkeinrichtung (3) angeordnet sind.

5. Warmwasserspeicher nach einem der Ansprüche 1 bis 4,
**dadurch gekennzeichnet,**
**dass** eine im Behälter (1) ausmündende Öffnungsquerschnittsfläche (2.1) des Zufuhrrohres (2) in einem Winkel von 0° bis 45° zur Horizontalen verlaufend angeordnet ist.

6. Warmwasserspeicher nach Anspruch 4 und 5,
**dadurch gekennzeichnet,**
**dass** die Umfangsfläche senkrecht zur Öffnungsquerschnittsfläche (2.1) des Zufuhrrohres (2) angeordnet ist.

7. Warmwasserspeicher nach Anspruch 2 und 3,
**dadurch gekennzeichnet,**
**dass** zwischen dem Rohranschlussstutzen (3.2) und den Austrittsöffnungen (3.3) ein Strömungslabyrinth (3.4) zur mehrfachen Umlenkung des Wärmeträgermediums innerhalb der Umlenkeinrichtung (3) vorgesehen ist.

8. Warmwasserspeicher nach Anspruch 7,
**dadurch gekennzeichnet,**
**dass** das Strömungslabyrinth (3.4) aus zwei Labyrinthteilen besteht, die wahlweise in beiden baugleichen Einzelteilen oder beidseitig des Filmscharniers (3.1) angeordnet sind.

9. Warmwasserspeicher nach einem der Ansprüche 1 bis 8,
**dadurch gekennzeichnet,**
**dass** an einem im Behälter (1) befindlichen Ende des Zufuhrrohres (2) ein Befestigungselement (2.2) für die Umlenkeinrichtung (3) vorgesehen ist.

10. Warmwasserspeicher nach Anspruch 9,
**dadurch gekennzeichnet,**
**dass** an der Umlenkeinrichtung (3) ein mit dem Befestigungselement (2.2) zusammenwirkendes Halteelement (3.5) vorgesehen ist.

## Claims

1. Hot water storage tank, comprising a deflection device (3) and a container (1), through which a feed pipe (2) for heat transfer medium to be stored passes at a location in the bottom region (1.1) of the container, said feed pipe opening into the deflection device (3), which is situated in the interior of the container (1) and is provided to distribute the heat transfer medium,
**characterised in that**
the deflection device (3) is formed either from two identical individual parts or from a single individual part having a film hinge (3.1) in the centre.

2. Hot water storage tank according to claim 1,
**characterised in that**
the deflection device (3) has a pipe connection neck (3.2) for fastening to the feed pipe (2).

3. Hot water storage tank according to claim 1 or 2,
**characterised in that**
the deflection device (3) has outlet openings (3.3) for the heat transfer medium at the end remote from the feed pipe (2).

4. Hot water storage tank according to claim 3,
**characterised in that**
the outlet openings (3.3) are situated in a circumferential face of the deflection device (3).

5. Hot water storage tank according to any one of claims 1 to 4,
**characterised in that**
an opening cross-sectional area (2.1) of the feed pipe (2) opening into the container (1) is arranged at an angle of 0° to 45° relative to the horizontal.

6. Hot water storage tank according to claims 4 and 5,
**characterised in that**
the circumferential face is arranged perpendicularly to the opening cross-sectional area (2.1) of the feed pipe (2).

7. Hot water storage tank according to claims 2 and 3,
**characterised in that**
a flow labyrinth (3.4) for deflecting the heat transfer medium multiple times within the deflection device (3) is provided between the pipe connection neck (3.2) and the outlet openings (3.3).

8. Hot water storage tank according to claim 7,
**characterised in that**
the flow labyrinth (3.4) consists of two labyrinth parts which are arranged either in both identical individual parts or on both sides of the film hinge (3.1).

9. Hot water storage tank according to any one of claims 1 to 8,
**characterised in that**
a fastening element (2.2) for the deflection device (3) is provided on an end of the feed pipe (2) which is situated in the container (1).

10. Hot water storage tank according to claim 9,
**characterised in that**
a retaining element (3.5) which interacts with the fastening element (2.2) is provided on the deflection device (3).

## Revendications

1. Chauffe-eau à accumulation, comprenant un dispositif de dérivation (3) et un réservoir (1), qui est constitué traversé à un emplacement de sa zone de fond (1.1) par un tuyau d'arrivée (2) pour le milieu caloporteur à accumuler, sachant que celui-ci est constitué débouchant dans le système de dérivation (3) prévu pour la répartition du milieu caloporteur, disposé à l'intérieur du réservoir (1) **caractérisé en ce que**
le système de dérivation (3) est formé selon nécessité de deux parties individuelles de construction identique ou d'une partie individuelle unique comportant au centre un film formant charnière (3.1)

2. Chauffe-eau à accumulation selon la revendication 1,
**caractérisé en ce que**
le système de dérivation (3) comporte une tubulure de raccord tubulaire (3.2) pour la fixation au tuyau d'arrivée (2).

3. Chauffe-eau à accumulation selon la revendication 1 ou 2,
**caractérisé en ce que**
le système de dérivation (3) comporte à son extrémité opposée au tuyau d'arrivée (2) des ouvertures de sortie (3.3) pour le milieu caloporteur.

4. Chauffe-eau à accumulation selon la revendication 3,
**caractérisé en ce que**
les ouvertures de sortie (3.3) sont disposées sur une surface périphérique du système de dérivation (3).

5. Chauffe-eau à accumulation selon l'une quelconque des revendications 1 à 4,
**caractérisé en ce qu'**
une surface de section d'ouverture (2.1) du tuyau d'arrivée (2), débouchant dans le réservoir (1), est disposée passant dans un angle de 0° à 45° par rapport à l'horizontale.

6. Chauffe-eau à accumulation selon les revendications 4 et 5,
**caractérisé en ce que**
la surface périphérique est disposée perpendiculairement à la surface de section d'ouverture (2.1) du tuyau d'arrivée (2).

7. Chauffe-eau à accumulation selon les revendications 2 et 3,
**caractérisé en ce qu'**
entre la tubulure de raccord tubulaire (3.2) et les ouvertures de sortie (3.3) est prévu un labyrinthe d'écoulement (3.4) pour la dérivation multiple du milieu caloporteur à l'intérieur du système de dérivation (3).

8. Chauffe-eau à accumulation selon la revendication 7,
**caractérisé en ce que**
le labyrinthe d'écoulement (3.4) est composé de deux parties de labyrinthe, qui sont disposées selon nécessité dans deux parties individuelles de construction identique ou des deux côtés du film formant charnière (3.1).

9. Chauffe-eau à accumulation selon l'une quelconque des revendications 1 à 8,
**caractérisé en ce qu'**
un élément de fixation (2.2) pour le système de dérivation (3) est prévu sur une extrémité du tuyau d'arrivée (2) se trouvant dans le réservoir (1) .

10. Chauffe-eau à accumulation selon la revendication 9,
**caractérisé en ce qu'**
un élément de retenue (3.5) coopérant avec l'élément de fixation (2.2) est prévu sur le système de dérivation (3).
